# EUROPÄISCHE PATENTANMELDUNG

(11) **EP 2 421 209 A2**
(43) Veröffentlichungstag der Anmeldung: **22.02.2012**
(21) Anmeldenummer: 11450104.2
(22) Anmeldetag: 12.08.2011
(51) Int. Cl.: H04L 12/56

(54) **Verfahren zum Senden digitaler Daten**

(30) Priorität: 16.08.2010 AT 13692010
(71) Anmelder: KWB - Kraft und Wärme aus Biomasse Gesellschaft m.b.H., 8321 St. Margarethen/Raab (AT)
(72) Erfinder: Knaus, Jozef, 8160 Mortantsch (AU); Pölzler, Ernst, 8010 Graz (AT)
(74) Vertreter: Gibler & Poth Patentanwälte OG

(57) **Zusammenfassung**

Bei einem Verfahren zum Senden digitaler Daten, wobei ein einem Übertragungsprotokoll, vorzugsweise dem TCP/IP-Protokoll, entsprechendes digitales Datenpaket an einer ersten Schnittstelle (11) empfangen wird, wird vorgeschlagen, dass das empfangene digitale Datenpaket vollständig in einen asynchronen seriellen digitalen Datenstrom gemäß UART-Protokoll gewandelt wird, dass eine zweite Schnittstelle zur Kollisionsvermeidung überwacht wird, und dass der serielle digitale Datenstrom an der zweiten Schnittstelle (12) lediglich dann ausgegeben wird, wenn bei der Überwachung ermittelt wird, dass die zweite Schnittstelle (12) frei zur Übermittlung des digitalen Datenstromes ist.

## Beschreibung

Die Erfindung betrifft ein Verfahren zum Senden digitaler Daten gemäß dem Oberbegriff des Patentanspruches 1.

Es gibt Verfahren zum Senden digitaler Daten. Das versenden der digitalen Daten kann dabei nach unterschiedlichen Übertragungsprotokollen erfolgen.

Ein bekanntes Verfahren zum Senden digitaler Daten ist Ethernet. Im 7-schichtigen OSI-Schichtenmodell, welches OSI-Schichtenmodell den Protokollstapel in 7 übereinanderliegenden Schichten darstellt, sind mit dem Ethernet, welches Ethernet gemäß IEEE 802.3 standardisiert ist, die Bitübertragungsschicht sowie die Verbindungsschicht festgelegt. OSI ist die fachübliche Abkürzung für Open System Interconnection, wobei das OSI-Schichtenmodell ebenfalls standardisiert ist. Die Bitübertragungsschicht ist in diesem Schichtenmodell die unterste Schicht und wird auch als Schicht 1, Layer 1 oder physikalische Schicht bezeichnet. Die Verbindungsschicht ist die zweit-unterste Schicht im OSI-Schichtenmodell und wird auch als Schicht 2, Layer 2 oder Sicherungsschicht bezeichnet. Ethernet ermöglicht den Datenaustausch in Form von Datenpaketen und ist die Basis für die weitverbreitete TCP/IP-Kommunikation. Beim Ethernet können Dienste der auf dem Ethernet aufsetzenden TCP/IP-Kommunikation verwendet werden.

Beim Ethernet wird mit Übertragungsraten von 10, 100 und 1000 Mbit mittels eines Ethernet-Übertragungsmediums, beispielsweise einem Koaxialkabel, einem Lichtwellenleiter oder dergleichen, übertragen. Weitere bekannte Verfahren zum Senden digitaler Daten sind ADSL, PPP, SLIP und Wireless LAN, auch genannt WLAN, welches Wireless LAN gemäß IEEE 802.11 standardisiert ist. Gemäß dem TCP/IP-Referenzmodell, welches eine alternative Darstellung des Protokollstapels als das OSI-Schichtenmodell ist, sind die Bitübertragungsschicht und die Verbindungsschicht von der im TCP/IP-Referenzmodell als Netzzugangsschicht bezeichneten untersten TCP/IP-Referenzmodell-Schichte umfasst.

Diese bekannten Verfahren zum Senden digitaler Daten, welche Basis für die weitverbreitete TCP/IP-Kommunikation sind, sind nicht mit Feldbusgeräten kompatibel, sodass TCP/IPfähige Rechner nicht ohne Weiteres mit Feldbusgeräten kommunizieren können. Des Weiteren sind diese bekannten Verfahren üblicherweise für den Einsatz in Bereichen mit erhöhtem Staub-, Schmutz- und/oder Störfeldaufkommen ungeeignet. Zur Behebung dieser Nachteile sind üblicherweise Schaltstellen im Netzwerk vorzusehen, welche jedoch einem einfachen Aufbau des lokalen Netzwerkes entgegenstehen.

Aufgabe der Erfindung ist daher, ein Verfahren zum Senden digitaler Daten anzugeben, welches Verfahren eine einfache und rechenaufwandschonende Datenkommunikation in Bereichen mit erhöhtem Staub-, Schmutz- oder Störfeldaufkommen gewährleisten kann und welches Verfahren den einfachen Aufbau eines lokalen Netzwerkes ermöglicht. Erfindungsgemäß wird dies durch die Merkmale des Patentanspruches 1 erreicht.

Gemäß diesem Verfahren wird das, einem Übertragungsprotokoll, beispielsweise dem TCP/IP Protokoll, entsprechende Datenpaket vollständig in einen asynchronen seriellen digitalen Datenstrom gewandelt und lediglich dann versendet, wenn das Übertragungsmedium, und somit auch die zweite Schnittstelle, frei zur Übermittlung des asynchronen seriellen digitalen Datenstroms ist. Durch die Umwandlung des vollständigen Datenpakets, also nicht nur der in diesem enthaltenen Nutzdaten, sondern eben des vollständigen Datenpaketes, welches auch einen Header und ähnliches aufweist, kann auf eine rechenaufwendige Protokollumwandlung oder Protokollübersetzung verzichtet werden, also auf eine Extraktion der Nutzdaten aus dem Datenpaket und der anschließenden Bildung eines neuen Datenpakets. Vorteilhaft dabei ist, dass die Dienste des Übertragungsprotokolls, beispielsweise der TCP/IP-Kommunikation, unverändert weiterverwendet werden können, sodass beispielsweise das Adressierungsverfahren TCP/IP-v4 auch zur Adressierung von als Feldbusgerät ausgebildeten Netzwerkteilnehmern angewendet werden kann. Dadurch sind auch Feldbusgeräte auf deren Hardwareebene, also auf der Ebene der Verbindungsschicht, adressierbar, womit eine Hardwareadressierung der Feldbusgeräte gewährleistet werden kann. Vorteilhaft dabei ist, dass dabei der Rechenaufwand zum Adressieren und Leiten der digitalen Datenpakete besonders gering ist, da dabei die auf den Netzwerkteilnehmern, insbesondere auf den Feldbusgeräten, laufenden Anwendungen im Wesentlichen keinerlei Adressierungsaufgaben, im Sinne von Adressierung mittels Softwareprogrammierung auf der Ebene der Anwendungsschicht des OSI-Schichtenmodells, zu übernehmen hat. Dadurch können die Feldbusgeräte passiv an das Übertragungsmedium angeschlossen werden, sodass die Kommunikation nicht unterbrochen wird, wenn bei einem Feldbusgerät die Stromversorgung unterbrochen wird. Vorteilhaft dabei ist, dass das die digitalen Daten besonders zuverlässig gesendet und empfangen werden können und dass das Netzwerk besonders einfach aufgebaut und verwaltet werden kann.

Im Weiteren wird der asynchrone serielle digitale Datenstrom auch kurz als serieller digitaler Datenstrom oder als digitaler Datenstrom bezeichnet, wobei mit den Bezeichnungen serieller digitaler Datenstrom bzw. digitaler Datenstrom weiterhin der asynchrone serielle digitale Datenstrom gemäß dem UART-Protokoll gemeint ist.

Die Erfindung betrifft auch eine Verbindungsschichtbaugruppe für eine Netzwerkbaugruppe gemäß dem Oberbegriff des Patentanspruches 8.

Die Verbindungsschichtbaugruppe ist jene Baugruppe einer Netzwerkbaugruppe, welche Verbindungsschichtbaugruppe die Funktionalität der Verbindungsschicht gemäß dem OSI-Schichtenmodell gewährleistet. Eine bekannte Ausbildung der Verbindungsschichtbaugruppe, die sogenannte Ethernet-Verbindungsschichtbaugruppe, wird bei Ethernet verwendet. Aufgabe der Erfindung ist weiters, eine Verbindungsschichtbaugruppe anzugeben, welche eine einfache und rechenaufwandschonende Datenkommunikation in Bereichen mit erhöhtem Staub-, Schmutz- oder Störfeldaufkommen gewährleisten kann und welche Verbindungsschichtbaugruppe den einfachen Aufbau eines lokalen Netzwerkes ermöglicht.

Erfindungsgemäß wird dies durch die Merkmale des Patentanspruches 8 erreicht.

Diese Verbindungsschichtbaugruppe ermöglicht die Durchführung des Verfahrens gemäß dem Patentanspruch 1 und ermöglicht in vorteilhafter Weise die kostengünstige und rechnenaufwandschonende Datenkommunikation zwischen Netzwerkteilnehmern, insbesondere zwischen ersten Netzwerkteilnehmern, welche als Feldbusgeräte ausgestaltet sind, und zweiten Netzwerkteilnehmern, welche als Rechner ausgestaltet sind.

Die Unteransprüche, welche ebenso wie die Patentansprüche 1 und 8 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 schematisch ein Netzwerk einer ersten Ausführungsform umfassend ein Feldbusgerät, eine Bridge und einen Rechner;
Fig. 2 im Detail schematisch die Netzwerkbaugruppe des ersten Endgerätes der Fig. 1; und
Fig. 3 im Detail schematisch die Bridge der Fig. 1.

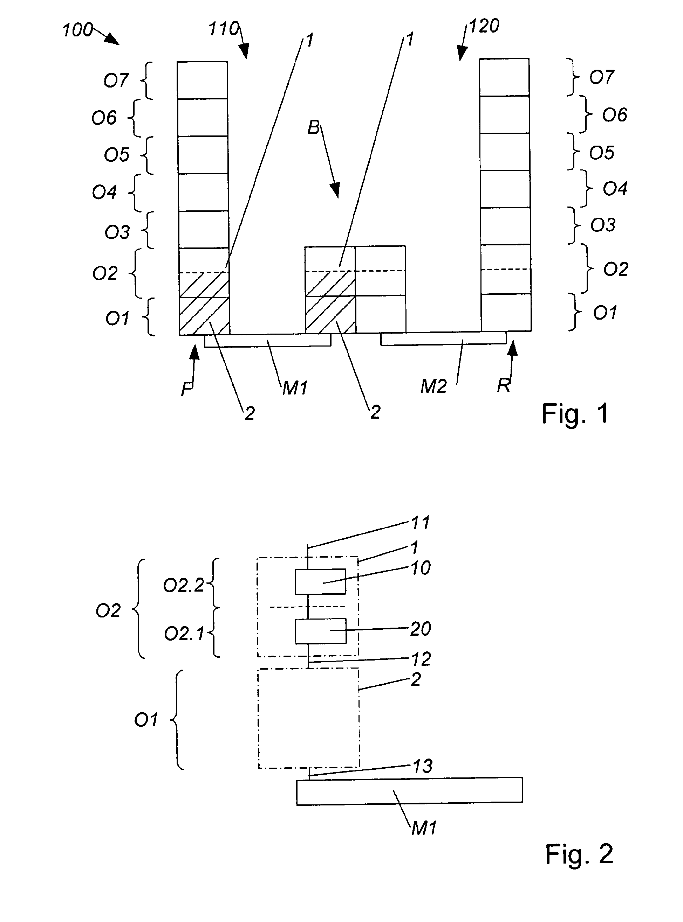

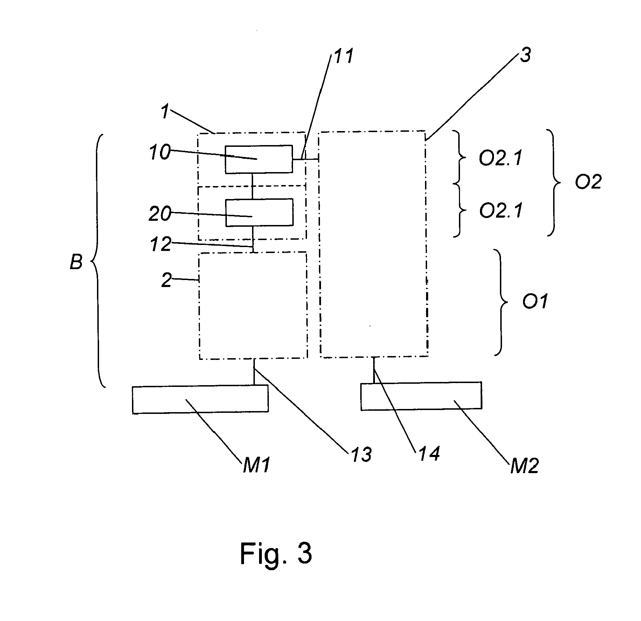

Die Fig. 1 bis 3 zeigen unter anderem schematisch eine Verbindungsschichtbaugruppe 1 für eine Netzwerkbaugruppe, wobei die Verbindungsschichtbaugruppe einen Logical Link Controller 10 umfasst, wobei der Logical Link Controller 10 mit einer ersten Schnittstelle 11 der Verbindungsschichtbaugruppe 1 verbunden ist, wobei die erste Schnittstelle 11 zum Übertragen eines, einem Übertragungsprotokoll, vorzugsweise dem TCP/IP-Protokoll, entsprechenden Datenpaketes ausgebildet ist, und wobei die Verbindungsschichtbaugruppe 1 eine zweite Schnittstelle 12 zum Verbinden der Verbindungsschichtbaugruppe 1 mit einer Bitübertragungsschichtbaugruppe 2 umfasst, wobei, um eine einfache und rechenaufwandschonende Datenkommunikation in Bereichen mit erhöhtem Staub-, Schmutz- oder Störfeldaufkommen und einen einfachen Aufbau eines lokalen Netzwerkes zu gewährleisten, vorgesehen ist, dass die Verbindungsschichtbaugruppe 1 weiters einen UART 20 umfasst, und dass der UART 20 an einem ersten Ende mit dem Logical Link Controller 10 und an einem zweiten Ende mit der zweiten Schnittstelle 12 verbunden ist, um beim Senden das an der ersten Schnittstelle 11 empfangene Datenpaket vollständig in einen dem UART-Protokoll entsprechenden seriellen digitalen Datenstrom zu wandeln und an der zweiten Schnittstelle 12 auszugeben, und um beim Empfangen den an der zweiten Schnittstelle 12 empfangenen, dem UART-Protokoll entsprechenden seriellen digitalen Datenstrom zum dem Übertragungsprotokoll entsprechenden Datenpaket zu wandeln und an der zweiten Schnittstelle 11 auszugeben, und dass der UART 20 ausgebildet ist, um beim Senden ein Kollisionsvermeidungsverfahren, vorzugsweise gemäß dem CSMA/CA-Standard, anzuwenden.

UART ist die Abkürzung für Universal Asynchronous Receiver-Transmitter, zu Deutsch universeller asynchroner Empfangs- und Sendebaustein, wobei dieser Empfangs- und Sendebaustein fachüblich als UART bezeichnet wird. Der Logical Link Controller, kurz LLC, zu Deutsch logische Verbindungssteuerung, bildete einen Teil der Funktionalität der Sicherungsschicht aus und stellt Übertragungsdienste zur Verfügung. CSMA/CA ist die gebräuchliche Abkürzung für Carrier Sense Multiple Access with Collision Avoidance, zu Deutsch Trägermessung bei Mehrfachzugriff mit Kollisionsvermeidung, und ist ein Protokoll zur Regelung von Situationen in einem lokalen Netzwerk.

Die Verbindungsschichtbaugruppe 1 ist ausgebildet zur Ausführung eines Verfahrens zum Senden digitaler Daten, bei welchem Verfahren das einem Übertragungsprotokoll, vorzugsweise dem TCP/IP-Protokoll, entsprechendes digitales Datenpaket an einer ersten Schnittstelle 11 empfangen wird, und bei welchem Verfahren, um eine einfache und rechenaufwandschonende Datenkommunikation auch in Bereichen mit erhöhtem Staub-, Schmutz- oder Störfeldaufkommen und um den einfachen Aufbau eines lokalen Netzwerkes zu gewährleisten, vorgesehen ist, dass das empfangene digitale Datenpaket vollständig in einen asynchronen seriellen digitalen Datenstrom gemäß UART-Protokoll gewandelt wird, dass eine zweite Schnittstelle zur Kollisionsvermeidung überwacht wird, und dass der serielle digitale Datenstrom an der zweiten Schnittstelle 12 lediglich dann ausgegeben wird, wenn bei der Überwachung ermittelt wird, dass die zweite Schnittstelle 12 frei zur Übermittlung des digitalen Datenstromes ist.

Vorteilhaft an dem Verfahren und an der Verbindungsschichtbaugruppe 1 ist, dass die Dienste des Übertragungsprotokolls, beispielsweise der TCP/IP-Kommunikation, unverändert weiterverwendet werden können und dass beispielsweise das Adressierungsverfahren TCP/IPv4 auch zur Adressierung der als Feldbusgerät F ausgebildeten Netzwerkteilnehmer angewendet werden kann. Dadurch sind auch die Feldbusgeräte F auf deren Hardwareebene adressierbar, womit eine Hardwareadressierung der Feldbusgeräte F gewährleistet werden kann, welches die Programmierung der Feldbusgeräte F vereinfacht und welches die Steuerung, Regelung und Ablesung der Feldbusgeräte F mittels eines internetfähigen Rechners R wesentlich erleichtert. Vorteilhaft dabei ist, dass dabei der Rechenaufwand zum Adressieren und Leiten der digitalen Datenpakete besonders gering ist. Weiters können die Feldbusgeräte F passiv an das Übertragungsmedium M1 angeschlossen werden, sodass die Datenkommunikation nicht unterbrochen wird, wenn bei einem Feldbusgerät F die Stromversorgung unterbrochen wird. Vorteilhaft dabei ist, dass die digitalen Daten besonders zuverlässig gesendet und empfangen werden können. In diesem Sinne kann das Feldbusgerät F TCP/IP-fähig gemacht werden, also ausgebildet werden, um mit weiteren Netzwerkteilnehmern, insbesondere mit einem internetfähigen Rechner R, mittels dem Adressierungsverfahren TCP/IP-v4 zu kommunizieren, wozu insbesondere vorgesehen sein kann, dass die vom Feldbusgerät F umfasste UART 20 eine eindeutige MAC-Adresse aufweist, wobei MAC die Abkürzung für Medium Access Control, zu Deutsch Medienzugriffskontrolle, ist. Mittels der UART-Protokoll-basierten Datenkommunikation kann die Datenkommunikation insbesondere in Bereichen mit erhöhtem Staub-, Schmutz- oder Störfeldaufkommen besonders zuverlässig erfolgen und der einfache Aufbau des lokalen Netzwerkes 100 kann - je nach Wahl der Übertragungsart, elektronisch, optisch oder mittels Funk und des der Übertragungsart entsprechenden Übertagungsmediums M1, M2 - mit einer Ausdehnung von über 500m, insbesondere von bis zu einer Ausdehnung von 5000m, gewährleistet werden.

Es sind viele verschiedene Übertragungsprotokolle bekannt, beispielsweise TCP-IP, DECnet oder IPX, bei welchen die digitalen Datenpakete unterschiedlich aufgebaut sind. In der Regel haben solche digitalen Datenpakete einen Header, in welchem beispielsweise Informationen wie die Quelladresse, Zieladresse oder die Länge des Datenpakets gespeichert sind, sowie Nutzdaten. Die digitalen Datenpakete der unterschiedlichen Übertragungsprotokolle können hierbei unterschiedlich aufgebaut und organisiert sein.

Besonders bevorzugt wird ein dem TCP/IP-Protokoll entsprechendes digitales Datenpaket verwendet. Hierbei steht TCP/IP stellvertretend für die gesamte Protokollfamilie, also unter anderem auch UDP/IP. Ein digitales Datenpaket des TCP/IP-Protokolls kann beispielsweise einen Header umfassend 24 Bytes, und eine Gesamtlänge bis zu 1500 Bytes aufweisen.

Die Verbindungsschichtbaugruppe 1 ist jene Baugruppe, welche die Funktionalität der Verbindungsschicht 02 gemäß dem OSI-Schichtenmodell 01-07 gewährleistet. Die Verbindungsschicht 02 umfasst die Subschicht 2.1, welche als MAC-Schicht 02.1 bezeichnet wird, und die Subschicht 2.2, welche als LLC-Schicht 02.2 bezeichnet wird. Der Logical Link Controller 10 gewährleistet die Funktionalität der LLC-Schicht 02.2. Die MAC-Schicht 02.1 gewährleistet die Medienzugriffskontrolle. Die Softwareanwendung agiert auf den obersten drei Schichten O5-O7 des OSI-Schichtenmodells O1-O7. Das Internetprotokoll IP kommt zum Einsatz auf der Vermittlungsschicht 03 des OSI-Schichtenmodells O1-O7. TCP ist die Abkürzung für das Transmission Control Protocol, zu Deutsch Übertragungskontrolle, und übernimmt die Aufgaben der vierten Schicht, der Transportschicht 04, des OSI-Schichtenmodells O1-O7. Die dargestellte Höhe der einzelnen Blöcke in Fig. 1, welche die einzelnen Schichten des OSI-Schichtenmodells O1-O7 darstellen, ist hierbei willkürlich gewählt.

Dass das empfangene digitale Datenpaket vollständig in einen asynchronen seriellen digitalen Datenstrom gemäß UART-Protokoll gewandelt wird bedeutet in diesem Zusammenhang, dass das gesamte digitale Datenpaket wie es empfangen wurde, also Nutzdaten, Header und andere Teile des digitalen Datenpakets, welche gemäß dem verwendeten Übertragungsprotokoll Teil des Datenpaketes sind, als serielle digitale Datenstrom mit einem vorgegebenen Rahmen fester Größe übertragen werden. Der zusammengesetzte Datenstrom ergibt wieder das vorher geteilte vollständige digitale Datenpaket.

Besonders bevorzugt kann vorgesehen sein, dass zur Wandlung des empfangenen digitalen Datenpakets in den seriellen Datenstrom, das vollständige empfangene Datenpaket in Blöcke vorgebbarer, vorzugsweise für alle Blöcke gleiche, Bitlänge geteilt wird. Die Bitlänge kann hierbei vorzugsweise zwischen 5 bis 32 Bits, bevorzugt 8 Bits sein.

Insbesondere kann vorgesehen sein, dass die Teilung des empfangenen digitalen Datenpakets in die Blöcke vorgebbarer Bitlänge gänzlich unabhängig von dem Aufbau des empfangenen Datenpakets ist, also dass beispielsweise nicht zwischen Header und Nutzdaten unterschieden wird, sondern das vollständige digitale Datenpaket so wie es empfangen wurde in die Blöcke aufgeteilt wird. Dadurch ist keine Umprotokollierung oder Übersetzung des Protokolls notwendig.

Weiters kann bevorzugt vorgesehen sein, dass jeweils ein Block jeweils einen Datenblock in dem seriellen Datenstrom bildet. Also, dass die Blöcke aus dem zerteilten vollständigen digitalen Datenpaket, welche beispielsweise Nutzdaten oder Daten des Headers aufweisen können, die Nutzdaten oder Daten-Bits des seriellen Datenstroms bilden, und/oder die Einheiten bilden, welche dem UART übergeben werden.

Gemäß dem UART-Protokoll werden die Daten als der serielle digitale Datenstrom mit einem vorgegebenen Rahmen fester Größe, dem sogenannten Frame, übertragen, wobei der vorgegebene Rahmen aus einem Start-Bit, fünf bis zweiunddreißig Daten-Bits, bevorzugt acht Daten-Bits, und einem Stopp-Bit, besteht. Bevorzugt kann der Rahmen umfassend acht Daten-Bits gewählt werden.

Beim Versenden des, insbesondere von der Vermittlungsschicht 03 kommenden, digitalen Datenpaketes gemäß dem Übertragungsprotokoll, insbesondere dem TCP/IP-Protokoll, kann insbesondere weiters vorgesehen sein, dass diesem, an der ersten Schnittstelle 11 empfangenen Datenpaket eine Prüfsumme, die sogenannte CRC, angefügt wird, dass das die Prüfsumme umfassende Datenpaket in eine Vielzahl von Einheiten vorgegebener fester Größen unterteilt werden, wobei die Größe sämtlicher Einheiten fest zwischen 5 und 32 Bits, bevorzugt 8 Bits, vorgegeben wird. Die Einheiten werden seriell aufeinander folgend der UART übergeben, mittels welcher jede Einheit im vorgegebenen Rahmen verpackt wird. Insbesondere kann vorgesehen sein, dass der serielle Datenstrom eine geringere Bitrate als beispielsweise Ethernet aufweist, wodurch mittels einer einfachen Zweidrahtleitung auch große Entfernungen störsicher überbrückt werden können.

Der Zugriff auf das Übertragungsmedium M1 erfolgt beim Versenden bevorzugt nach dem CSMA/CA-Verfahren, wozu die zweite Schnittstelle 12 - wie vorstehend beschrieben - überwacht wird. Dadurch werden Kollisionen durch das gleichzeitige Versenden von Daten von mehreren Netzwerkteilnehmern vermieden. Insbesondere kann dadurch ein Netzwerkteilnehmer über einen seriellen Datenstrom mit einem anderen Netzwerkteilnehmer unter Kollisionsvermeidung kommunizieren. Weiters kann auf Hardware zur Detektion von Kollisionen verzichtet werden.

In vorteilhafter Weise kann die Verbindungsschichtbaugruppe 1 von einer Netzwerkbaugruppe umfasst sein, wobei vorgesehen ist, dass die Netzwerkbaugruppe weiters eine Bitübertragungsschichtbaugruppe 2 umfasst, dass die Bitübertragungsschichtbaugruppe 2 an einem dritten Ende mit der zweiten Schnittstelle 12 verbunden ist, dass die Bitübertragungsschichtbaugruppe 2 an einem vierten Ende eine dritte Schnittstelle 13 zum Verbinden mit dem Übertragungsmedium M1 umfasst, um beim Senden den über die zweite Schnittstelle 12 übertragenen seriellen digitalen Datenstrom in ein auf das Übertragungsmedium M1 übertragbares erstes physikalisches Signal zu wandeln und an der dritten Schnittstelle 13 auszugeben. Die Bitübertragungsschichtbaugruppe 2 ist jene Baugruppe der Netzwerkbaugruppe, welche Bitübertragungsschichtbaugruppe 2 die Funktionalität der Bitübertragungsschicht O1 gemäß dem 7-schichtigen OSI-Schichtenmodell O1-O7 gewährleistet. Die Netzwerkbaugruppe ist jene Baugruppe, welche die Funktionalität der Netzzugangsschicht gemäß dem TCP/IP-Referenzmodell gewährleistet. Die Netzwerkbaugruppe ermöglicht beim Verfahren zum Senden digitaler Daten in vorteilhafter Weise, dass der an die zweite Schnittstelle 12 ausgegebene serielle digitale Datenstrom in ein physikalisches Signal gewandelt und zum Übertragen auf ein Übertragungsmedium M1 an einer dritten Schnittstelle 13 ausgegeben wird. Dies ermöglicht weiters ein Verfahren zum Empfangen digitaler Daten in vorteilhafter Weise derart, dass ein an der dritten Schnittstelle 13 empfangenes, sinnvolles physikalisches Signal in den seriellen digitalen Datenstrom gewandelt wird, der serielle digitale Datenstrom an die zweite Schnittstelle 12 geleitet wird, in ein digitales Datenpaket gemäß dem TCP/IP-Protokoll gewandelt wird und das digitale Datenpaket an der ersten Schnittstelle 11 ausgegeben wird. Dadurch, dass die zweite Schnittstelle 12 und die dritte Schnittstelle 13 miteinander verbunden sind, ist gewährleistet, dass das an die dritte Schnittstelle 13 anschließbare Übertragungsmedium M1, M2 mittels dem CSMA/CA-Verfahren überwacht werden kann.

In diesem Zusammenhang kann insbesondere vorgesehen sein, dass die Bitübertragungsschichtbaugruppe 2 in einer ersten Ausbildung ausgebildet ist, um beim Senden den über die zweite Schnittstelle 12 übertragenen seriellen digitalen Datenstrom in ein elektrisches Signal gemäß dem EIA-485-Standard zu wandeln und an der dritten Schnittstelle 13 auszugeben. Dies ermöglicht beim Verfahren zum Senden digitaler Daten in vorteilhafter Weise, dass der an die zweite Schnittstelle 12 ausgegebene serielle digitale Datenstrom in ein elektrisches Signal gemäß dem EIA-485-Standard gewandelt an der dritten Schnittstelle 13 ausgegeben wird. Vorteilhaft beim EIA-485-Standard ist, dass das physikalische Signal, also das elektrische Signal, besonders störfest ist und über ein Signaladernpaar eines für den EIA-485-Standard ausgebildeten Übertragungsmedium M1, M2 übertragbar ist. Beim Empfangen eines elektrischen Signals gemäß dem EIA-485-Standard wandelt die Bitübertragungsschichtbaugruppe 2 das elektrische Signal in den digitalen Datenstrom mit dem vorgegebenen Rahmen fester Größe. Dieser digitale Datenstrom wird mittels der zweiten Schnittstelle an die UART 20 geleitet, welche beim Empfangen des digitalen Datenstromes als Empfänger wirkt. Mittels der UART 20 werden die Daten-Bits aus dem digitalen Datenstrom ermittelt. Die Daten-Bits werden an den Logical Link Controller 10 geleitet, welcher aus den Daten-Bits ein die Prüfsumme umfassendes Datenpaket generiert. Die Prüfsumme des Datenpakets wird geprüft und bei korrekter Prüfsumme wird die Prüfsumme vom Datenpaket entfernt und als TCP/IP-Protokoll entsprechendes digitales Datenpaket an der ersten Schnittstelle 11 ausgegeben. Das an der ersten Schnittstelle 11 ausgegebene digitale Datenpaket kann insbesondere an die Vermittlungsschichte 03 des Netzteilnehmers, welcher Netzteilnehmer die Netzwerkbaugruppe umfasst, weitergeleitet werden. Das an der ersten Schnittstelle 11 ausgegebene digitale Datenpaket kann insbesondere an die Vermittlungsschichte 03 des Netzteilnehmers, welcher Netzteilnehmer die Netzwerkbaugruppe umfasst, weitergeleitet werden.

In einer zweiten Ausbildung der Bitübertragungsschichtbaugruppe 2 kann vorgesehen sein, dass die Bitübertragungsschichtbaugruppe 2 ausgebildet ist, um beim Senden den über die zweite Schnittstelle 12 übertragenen seriellen digitalen Datenstrom in ein Lichtsignal zu wandeln, sodass das Lichtsignal auf das hiebei als Lichtwellenleiter ausgebildete Übertragungsmedium M1, M2 übertragbar ist.

In einer dritten Ausbildung der Bitübertragungsschichtbaugruppe 2 kann vorgesehen sein, dass die Bitübertragungsschichtbaugruppe 2 ausgebildet ist, um beim Senden den über die zweite Schnittstelle 12 übertragenen seriellen digitalen Datenstrom in ein Funksignal zu wandeln, wobei die zwischen den Netzwerkteilnehmern angeordnete Funkstrecke als Übertragungsmedium M1, M2 nutzbar ist.

Das Netzwerk 100 umfasst mehrere Netzwerkteilnehmer und wenigstens ein Übertragungsmedium M1, M2. Netzwerkteilnehmer sind Endgeräte, beispielsweise Feldbusgeräte F und Rechner R, und Verteilungseinrichtungen, beispielsweise Bridges B, Router und dergleichen. Feldbusgeräte F sind beispielsweise Sensoren, Maschinen, Brennkessel, Schranken, Alarmanlagen, Förderbänder und dergleichen. Rechner R sind beispielsweise Arbeitsplatzrechner, Server und dergleichen. Das vorstehend beschriebene Verfahren kann von Feldbusgeräten F, von Rechnern R und/oder von Verteilungseinrichtungen ausgeführt werden, welche die Verbindungsschichtbaugruppe 1 und die Bitübertragungsschichtbaugruppe 2 umfassen. Vorteilhaft dabei ist, dass mehrere unterschiedliche Feldgeräte F einfach und zuverlässig mit einem oder mehreren Rechnern R mittels des Adressierungsverfahrens TCP/IP-v4 kommunizieren können.

In diesem Zusammenhang kann in einer - nicht dargestellten - zweiten Ausführungsform des Netzwerkes 100 vorgesehen sein, dass das Netzwerk 100 wenigstens ein Feldbusgerät F und wenigstens einen Rechner R umfasst, wobei sämtliche der Feldbusgeräte F und der wenigstens eine Rechner R mittels des Übertragungsmediums M1 verbunden sind, wobei sämtliche der Feldbusgeräte F und der Rechner R jeweils eine Netzwerkbaugruppe umfassen, welche Netzwerkbaugruppe eine Verbindungsschichtbaugruppe 1 und eine Bitübertragungsschichtbaugruppe 2 umfasst.

Bei einer bevorzugten Weiterbildung des Verfahrens kann weiters vorgesehen sein, dass die Umwandlung des Datenpaketes in den seriellen digitalen Datenstrom transparent erfolgt, wozu die UART 20 ausgebildet ist, um das Datenpaket in den Datenstrom und den digitalen Datenstrom in das Datenpaket transparent zu wandeln. Unter Transparenz versteht man im Bereich der Netzwerktechnik, dass ein bestimmter Teil des Systems vorhanden ist oder ein bestimmtes Verfahren durchgeführt wird, welches aber ansonsten unsichtbar, also für den Benützer nicht wahrnehmbar ist. Eine transparente Umwandlung des Datenpaketes in den seriellen digitalen Datenstrom bedeutet in diesem Zusammenhang, dass die Struktur des Datenpakets bei der Umwandlung nicht verändert wird, dass insbesondere das Datenpaket bis auf die Zerteilung nicht verändert wird. Dadurch kann es einfach wieder zusammengesetzt werden, ohne dass ein anderer Netzwerkteilnehmer mit dem Umstand konfrontiert wird, dass eine Umwandlung des Datenpakets in einen seriellen Datenstrom und eine entsprechende Rückumwandlung stattgefunden hat.

In diesem Zusammenhang kann insbesondere vorgesehen sein, dass die Bridge B die Netzwerkbaugruppe und eine Ethernetbaugruppe 3 umfasst, und dass die Ethernetbaugruppe 3 an einem fünften Ende mit der ersten Schnittstelle 11 der Netzwerkbaugruppe verbunden ist, dass die Ethernetbaugruppe 3 eine vierte Schnittstelle 14 zum Verbinden mit einem als Ethernet-Übertragungsmedium ausgebildetem zweiten Übertragungsmedium M2 umfasst, und dass die UART 20 ausgebildet ist, um das Datenpaket in den Datenstrom und den Datenstrom in das Datenpaket transparent zu wandeln. Dadurch können ein erstes Teilnetz 110 des Netzwerkes 100 und ein zweites Teilnetz 120 des Netzwerkes 100 transparent miteinander verbunden werden, sodass die Netzwerkteilnehmer des ersten Teilnetzes 110 und die Netzwerkteilnehmer des zweiten Teilnetzes 120 weiterhin einander auf Hardwareebene, also auf Ebene der Verbindungsschicht 02, adressieren können, wodurch eine rasche, zuverlässige und rechenaufwandschonende Adressierung auch bei einer Kopplung wenigstens zweier heterogener Teilnetze gewährleistet werden kann. Insbesondere kann hiebei vorgesehen sein, dass die Bridge B keine MAC-Adresse aufweist, also MAC-adressenfrei ausgebildet ist. Vorteilhaft dabei ist weiters, dass sämtliche Endgeräte des Netzwerkes 100 gleichberechtigt angeschlossen werden könnten. Im Unterschied dazu sind bei einem herkömmlichen Netzwerk, welches ein herkömmliches Ethernet-Teilnetz, ein herkömmliches weiteres Teilnetz, beispielsweise ein herkömmliches EIA-485-Netzwerk, einen Switch zum Wandeln der physikalischen Signale des Ethernet-Teilnetzes und der physikalischen Signale eines weiteren Teilnetzes und herkömmliche Feldbusgeräte umfasst, der Switch als Master und die herkömmlichen Feldbusgeräte als Slave zu konfigurieren. Die Adressierung des einzelnen der Feldbusgeräte hat dann auf Softwareanwendungsebene, also auf einer der Schichten O5-O7 im OSI-Schichtenmodell, zu erfolgen, welche Adressierung auf Softwareanwendungsebene langsam ist und einen hohen Rechenaufwand erfordert.

In diesem Zusammenhang kann das Netzwerk 100 gemäß einer ersten Ausführungsform ausgebildet sein, wie diese erste Ausführungsform schematisch in Fig. 1 dargestellt ist. Bei der ersten Ausführungsform des Netzwerkes 100 ist vorgesehen, dass im ersten Teilnetz 110 die digitalen Daten mittels des digitalen Datenstromes gemäß dem UART-Protokol über das erste Übertragungsmedium M1 übertragen werden, dass im zweiten Teilnetz 110 die Daten gemäß dem Ethernet über das zweite Übertragungsmedium M2 übertragen werden und dass die transparente Datenwandlung zwischen den beiden Netzwerken mittels der Bridge B erfolgt. Das wenigstens eine Feldbusgerät F ist mittels des ersten Übertragungsmediums M1 mit der Bridge B verbunden und der wenigstens eine Rechner R ist mittels des zweiten Übertragungsmediums M2, welches als Ethernet-Übertragungsmedium ausgebildet ist, beispielsweise als LAN-Kabel, als Koaxialkabel, als Lichtwellenleiter oder als W-LAN-Verbindung ausgebildet ist, mit der Bridge B verbunden. Das derartige Netzwerk 100 kann, da zwei heterogene Teilnetze 110, 120 miteinander gekoppelt sind, als heterogenes Netzwerk 100 bezeichnet werden, wobei die Kopplung der heterogenen Teilnetze 110, 120 für die Netzwerkteilnehmer transparent ist.

In vorteilhafter Weiterbildung der ersten Ausführungsform des Netzwerkes 100 kann vorgesehen sein, dass das Netzwerk wenigstens drei heterogene Teilnetze 110, 120 umfasst und dass die Teilnetze 110, 120 mittels wenigstens zweier Bridges B miteinander gekoppelt werden. Das derartige Netzwerk 100 kann, da wenigstens drei heterogene Teilnetze 110, 120 miteinander gekoppelt sind, ebenfalls als heterogenes Netzwerk 100 bezeichnet werden, wobei die Kopplung der heterogenen Teilnetze 110, 120 für die Netzwerkteilnehmer weiterhin transparent ist.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Verfahren zum Senden digitaler Daten, wobei ein einem Übertragungsprotokoll, vorzugsweise dem TCP/IP-Protokoll, entsprechendes digitales Datenpaket an einer ersten Schnittstelle (11) empfangen wird, **dadurch gekennzeichnet, dass** das empfangene digitale Datenpaket vollständig in einen asynchronen seriellen digitalen Datenstrom gemäß UART-Protokoll gewandelt wird, dass eine zweite Schnittstelle zur Kollisionsvermeidung überwacht wird, und dass der serielle digitale Datenstrom an der zweiten Schnittstelle (12) lediglich dann ausgegeben wird, wenn bei der Überwachung ermittelt wird, dass die zweite Schnittstelle (12) frei zur Übermittlung des digitalen Datenstromes ist.

2. Verfahren nach Anspruch 1, **dadurch gekennzeichnet, dass** zur Wandlung des empfangenen digitalen Datenpakets in den seriellen Datenstrom, das vollständige empfangene Datenpaket in Blöcke vorgebbarer, vorzugsweise für alle Blöcke gleiche, Bitlänge geteilt wird.

3. Verfahren nach Anspruch 2, **dadurch gekennzeichnet, dass** jeweils ein Block jeweils einen Datenblock in dem seriellen Datenstrom bildet.

4. Verfahren nach einem der Ansprüche 1 bis 3, **dadurch gekennzeichnet, dass** zur Kollisionsvermeidung die zweite Schnittstelle (12) nach dem CSMA/CA-Standard überwacht wird.

5. Verfahren nach einem der Ansprüche 1 bis 4, **dadurch gekennzeichnet, dass** der an die zweite Schnittstelle (12) ausgegebene serielle digitale Datenstrom in ein physikalisches Signal, insbesondere in ein elektrisches Signal gemäß dem EIA-485-Standard, gewandelt und zum Übertragen auf ein Übertragungsmedium (M1) an einer dritten Schnittstelle (13) ausgegeben wird.

6. Verfahren nach einem der Ansprüche 1 bis 5, **dadurch gekennzeichnet, dass** die Umwandlung des Datenpaketes in den seriellen digitalen Datenstrom transparent erfolgt.

7. Verfahren nach einem der Ansprüche 1 bis 6, **dadurch gekennzeichnet, dass** dem empfangenen Datenpaket vor der Wandlung in den seriellen Datenstrom eine Prüfsumme angefügt wird.

8. Verbindungsschichtbaugruppe (1) für eine Netzwerkbaugruppe, wobei die Verbindungsschichtbaugruppe einen Logical Link Controller (10) umfasst, wobei der Logical Link Controller (10) mit einer ersten Schnittstelle (11) der Verbindungsschichtbaugruppe (1) verbunden ist, wobei die erste Schnittstelle (11) zum Übertragen eines einem Übertragungsprotokoll, vorzugsweise dem TCP/IP-Protokoll, entsprechenden Datenpaketes ausgebildet ist, und wobei die Verbindungsschichtbaugruppe (1) eine zweite Schnittstelle (12) zum Verbinden der Verbindungsschichtbaugruppe (1) mit einer Bitübertragungsschichtbaugruppe (2) umfasst, **dadurch gekennzeichnet, dass** die Verbindungsschichtbaugruppe (1) weiters einen UART (20) umfasst, und dass der UART (20) an einem ersten Ende mit dem Logical Link Controller (10) und an einem zweiten Ende mit der zweiten Schnittstelle (12) verbunden ist, um beim Senden das an der ersten Schnittstelle (11) empfangene Datenpaket vollständig in einen dem UART-Protokoll entsprechenden seriellen digitalen Datenstrom zu wandeln und an der zweiten Schnittstelle (12) auszugeben, und um beim Empfangen den an der zweiten Schnittstelle (12) empfangenen, dem UART-Protokoll entsprechenden seriellen digitalen Datenstrom zum dem Übertragungsprotokoll entsprechenden Datenpaket zu wandeln und an der zweiten Schnittstelle (11) auszugeben, und dass der UART (20) ausgebildet ist, um beim Senden ein Kollisionsvermeidungsverfahren, vorzugsweise gemäß dem CSMA/CA-Standard, anzuwenden.

9. Netzwerkbaugruppe, **dadurch gekennzeichnet, dass** die Netzwerkbaugruppe eine Verbindungsschichtbaugruppe (1) nach Anspruch 8 umfasst, dass die Netzwerkbaugruppe weiters eine Bitübertragungsschichtbaugruppe (2) umfasst, dass die Bitübertragungsschichtbaugruppe (2) an einem dritten Ende mit der zweiten Schnittstelle (12) verbunden ist, dass die Bitübertragungsschichtbaugruppe (2) an einem vierten Ende eine dritte Schnittstelle (13) zum Verbinden mit einem Übertragungsmedium (M1) umfasst, um beim Senden den über die zweite Schnittstelle (12) übertragbaren seriellen digitalen Datenstrom in ein auf das Übertragungsmedium (M1) übertragbares erstes physikalisches Signal zu wandeln und an der dritten Schnittstelle (13) auszugeben.

10. Netzwerkbaugruppe nach Anspruch 9, **dadurch gekennzeichnet, dass** die Bitübertragungsschichtbaugruppe (2) ausgebildet ist, um beim Senden den über die zweite Schnittstelle (12) übertragenen seriellen digitalen Datenstrom mittels eines elektrischen Signales gemäß dem EIA-485-Standard zu wandeln und an der dritten Schnittstelle (13) auszugeben.

11. Bridge (B), **dadurch gekennzeichnet, dass** die Bridge (B) eine Netzwerkbaugruppe nach Anspruch 9 oder 10 umfasst, dass die Bridge weiters eine Ethernetbaugruppe (3) umfasst, und dass die Ethernetbaugruppe (3) an einem fünften Ende mit der ersten Schnittstelle (11) der Netzwerkbaugruppe verbunden ist, dass die Ethernetbaugruppe (3) eine vierte Schnittstelle (14) zum Verbinden mit einem Ethernet-Übertragungsmedium (M2) umfasst, und dass die UART (20) ausgebildet ist, um das Datenpaket in den Datenstrom und den Datenstrom in das Datenpaket transparent zu wandeln.

12. Netzwerkteilnehmer umfassend eine Verbindungsschichtbaugruppe nach Anspruch 8, insbesondere umfassend eine Netzwerkbaugruppe nach Anspruch 9 oder 10.

13. Netzwerk (100) umfassend wenigstens zwei Netzwerkteilnehmer nach Anspruch 12 und wenigstens ein Übertragungsmedium (M1, M2).
